# EUROPEAN PATENT SPECIFICATION

(11) **EP 4 315 165 B1**
(45) Date of publication and mention of the grant of the patent: **04.11.2026**
(21) Application number: 21729708.4
(22) Date of filing: 10.05.2021
(51) Int. Cl.: G06N 3/084, G06N 3/042, G06N 5/01, G06N 20/00

(54) **INCORPORATION OF DECISION TREES IN A NEURAL NETWORK**
INTEGRATION VON ENTSCHEIDUNGSBÄUMEN IN EIN NEURONALES NETZWERK
INCORPORATION D'ARBRES DE DÉCISION DANS UN RÉSEAU NEURONAL

(43) Date of publication of application: 07.02.2024
(73) Proprietor: Google LLC, Mountain View, CA 94043 (US)
(72) Inventor: NUNES COELHO JR., Claudionor Jose, Mountain View, California 94043 (US); KUUSELA, Aki Oskari, Mountain View, California 94043 (US); CHATTERJEE, Satrajit, Mountain View, California 94043 (US); ZIELINSKI, Piotr, Mountain View, California 94043 (US); ZHUANG, Hao, Mountain View, California 94043 (US)
(74) Representative: Marks & Clerk GST
(86) International application number: PCT/US2021/031636
(87) International publication number: WO 2022/240391

(56) References cited:
- SIVAKUMAR CHIDAMBARAM ET AL: "PoET-BiN: Power Efficient Tiny Binary Neurons", ARXIV.ORG, CORNELL UNIVERSITY LIBRARY, 201 OLIN LIBRARY CORNELL UNIVERSITY ITHACA, NY 14853, 23 February 2020 (2020-02-23), XP081606167
- ABDELSALAM AHMED M ET AL: "POLYBiNN: A Scalable and Efficient Combinatorial Inference Engine for Neural Networks on FPGA", 2018 CONFERENCE ON DESIGN AND ARCHITECTURES FOR SIGNAL AND IMAGE PROCESSING (DASIP), IEEE, 10 October 2018 (2018-10-10), pages 19 - 24, XP033490438, DOI: 10.1109/DASIP.2018.8596871
- SURYABHAN SINGH HADA ET AL: "Sparse Oblique Decision Trees: A Tool to Understand and Manipulate Neural Net Features", ARXIV.ORG, CORNELL UNIVERSITY LIBRARY, 201 OLIN LIBRARY CORNELL UNIVERSITY ITHACA, NY 14853, 7 April 2021 (2021-04-07), XP081933642
- HUSSEIN HAZIMEH ET AL: "The Tree Ensemble Layer: Differentiability meets Conditional Computation", ARXIV.ORG, CORNELL UNIVERSITY LIBRARY, 201 OLIN LIBRARY CORNELL UNIVERSITY ITHACA, NY 14853, 11 July 2020 (2020-07-11), XP081705799
- DI WU ET AL: "EasyQuant: Post-training Quantization via Scale Optimization", ARXIV.ORG, CORNELL UNIVERSITY LIBRARY, 201 OLIN LIBRARY CORNELL UNIVERSITY ITHACA, NY 14853, 30 June 2020 (2020-06-30), XP081710713
- WOLFGANG FUHL ET AL: "Training Decision Trees as Replacement for Convolution Layers", ARXIV.ORG, CORNELL UNIVERSITY LIBRARY, 201 OLIN LIBRARY CORNELL UNIVERSITY ITHACA, NY 14853, 11 February 2020 (2020-02-11), XP081594833

## Description

### TECHNICAL FIELD

This specification relates to incorporating decision trees in a large neural network.

### BACKGROUND

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

More specifically, each neural network layer includes a plurality of nodes, and each layer represents a set of operations defined by the neural network. In general, these operations are arithmetic operations that can include linear operations, for example, additions and multiplications, and nonlinear operations, for example, non-linear activation functions like "Relu" or "Sigmoid" functions. The linear operations combine layer inputs and weights for the layer. The linear operations for each layer can be implemented using tensor operations, in which the weights of a layer are presented in a matrix or tensor form, and the layer inputs for the layer are presented in a vector form.

Large neural networks, i.e., neural networks with many layers and large numbers of parameters, have shown good performance on a variety of machine learning tasks. However, these large neural networks can have large latency and consume a large amount of computational resources, e.g., have large memory requirements and consume a significant number of processor cycles to make a prediction. One of the conventional techniques for increasing the computational efficiency of a neural network is to manipulate some of the weight matrices to be sparse matrices. A sparse matrix is a matrix with a large number of terms being zeros.

SIVAKUMAR CHIDAMBARAM ET AL describe in "PoET-BiN: Power Efficient Tiny Binary Neurons", ARXIV.ORG, CORNELL UNIVERSITY LIBRARY, 201 OLIN LIBRARY CORNELL UNIVERSITY ITHACA, NY 14853, 23 February 2020 (2020-02-23), replacing hidden layers of a neural network with a decision tree while keeping the fully connect layer for classification. ABDELSALAM AHMED M ET AL describe in "POLYBiNN: A Scalable and Efficient Combinatorial Inference Engine for Neural Networks on FPGA",2018 CONFERENCE ON DESIGN AND ARCHITECTURES FOR SIGNAL AND IMAGE PROCESSING (DASIP), IEEE, 10 October 2018 (2018-10-10), pages 19-24,DOI: 10.1109/DASIP.2018.8596871, replacing fully connected layers of DNNs and CNNs with a stack of decision trees. SURYABHAN SINGH HADA ET AL describe in "Sparse Oblique Decision Trees: A Tool to Understand and Manipulate Neural Net Features",ARXIV.ORG, CORNELL UNIVERSITY LIBRARY, 201 OLIN LIBRARY CORNELL UNIVERSITY ITHACA, NY 14853, 7 April 2021 (2021-04-07), mimicking part of the neural net with an oblique decision tree having sparse weight vectors at the decision nodes. HUSSEIN HAZIMEH ET AL describe in "The Tree Ensemble Layer: Differentiability meets Conditional Computation",ARXIV.ORG, CORNELL UNIVERSITY LIBRARY, 201 OLIN LIBRARY CORNELL UNIVERSITY ITHACA, NY 14853, 11 July 2020 (2020-07-11), a new layer for neural networks, composed of an ensemble of differentiable decision trees.

### SUMMARY

This specification describes technologies for incorporating decision trees in a large neural network to generate a new machine learning model.

The invention is defined in the appended independent claims. Embodiments of the invention are defined in the appended dependent claims.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 shows an example neural network deployment system including an example neural network modification engine.
FIG. 2A illustrates a portion of an example new machine learning model having a decision tree with binary quantization output.
FIG. 2B illustrates a portion of another example new machine learning model having a decision tree with ternary quantization output.
FIG. 3 is a flow diagram of an example process for generating a trained new machine learning model.
FIG. 4 is a flow diagram of an example process for selecting one or more groups of neural network layers.
FIG. 5 illustrates an example of a decision tree.
FIG. 6 illustrates an example implementation of a decision tree using fixed function hardware.
FIG. 7 illustrates an example programmable core to perform inference computations for a decision tree.

Like reference numbers and designations in the various drawings indicate like elements.

### DETAILED DESCRIPTION

One conventional approach to increase efficiency in training and computing a large neural network is to construct respective sparse matrices for activation inputs and weights of each layer. However, the approach of constructing sparse matrices can raise new issues. For example, using sparse matrices can cause a computing system to not access same memory addresses for a time period, which is also referred to as lacking inference locality. More specifically, when constructing a sparse matrix, the computing system stores non-zero terms of the original matrix in different memory addresses, which can be located physically far from each other. In some situations, the memory addresses for each term in a sparse matrix can change dynamically during computations. For example, a zero term can become non-zero after adding with another non-zero term. The computing system can therefore suffer from memory latency when accessing data stored in the memory, cache trashing, and even cache pollution, which eventually decreases the operation efficiency for training or processing inputs using a large neural network.

Alternatively, another conventional technique approach is fusing weight matrices into layer logic. For example, a system adopting the fusing weights technique can determine a zero term in a weight matrix, and thus does not execute the multiplication and accumulation operations for this term. Given that, the fusing weights technique can reduce computational costs for a large neural network by not performing any calculations that will output zero because one of the inputs is zero. However, fusing weights comes with a price. First, the fusing weights technique requires a neural network not to be modified once being deployed on a hardware accelerator, i.e., the zero terms in the weight matrices should remain zero during computation. However, in practice, the weight matrices of a deployed neural network might need to be fine-tuned using new training data. Second, if a zero term in a sparse weight matrix is shared by multiple operations, e.g., a multiplication followed by an addition, and followed by another multiplication, the system still needs to perform operations for the zero term.

The techniques described in the below specification can address the above-noted problems. More specifically, the described techniques can efficiently perform one or more inference computations for a large neural network using quantization and decision trees. In general, the described techniques relate to replacing one or more layers of a neural network by respective decision trees, and the inputs to and outputs from the decision tree are a quantized version of inputs and outputs for corresponding layers.

This specification describes a system implemented as computer programs on one or more computers in one or more locations that generates a new machine learning model by replacing one or more groups of network layers of a neural network by one or more decision trees to reduce the computational cost and improve efficiency for performing inference computations using economic hardware.

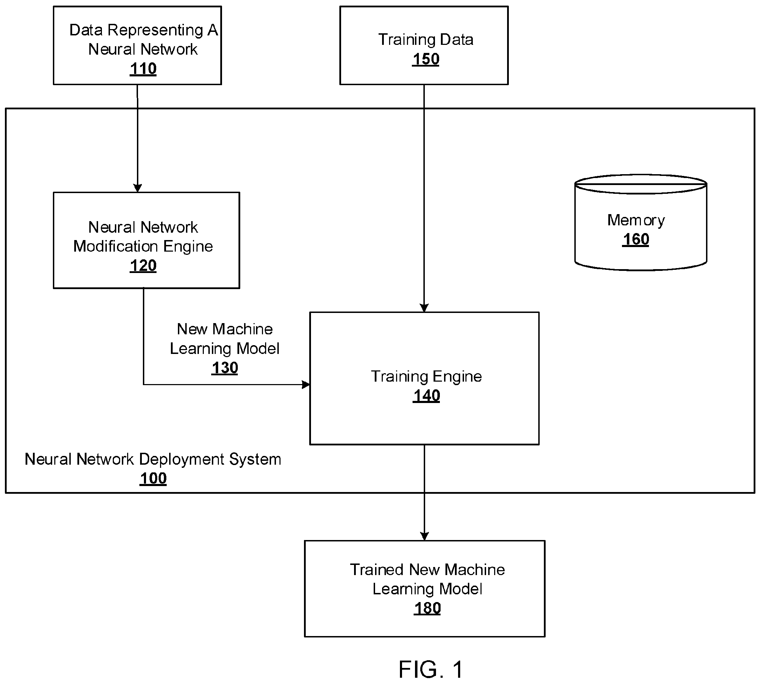

FIG. 1 shows an example neural network deployment system 100 including an example neural network modification engine 120.

In general, the neural network deployment system 100 receives as input data representing a neural network 110 and outputs a trained new machine learning model 180. The neural network deployment system 100 includes a neural network modification engine 120 for generating a new machine learning model 130 for an input neural network model. The new machine learning model 130 is a hybrid of the original input neural network model with one or more neural network layers replaced by one or more decision trees. The details of generating the new machine learning model 130 will be described below. The neural network deployment system 100 also includes a training engine 140 configured for training the new machine learning model using the training data 150, and a memory 160 configured to store and provide data (e.g., training and output data for a machine learning model, and data defining a machine learning model) for the training engine 140.

More specifically, the data representing a neural network 110 received by the deployment system 100 can include information defining the neural network such as operations of each layer of the neural network, and weights for each network layer.

The data 110 can also represent other aspects of the neural network. For example, the data 110 can include a number of network layers within the neural network, respective numbers of nodes in each layer, data representing one or more types of inter-layer connections, e.g., element-wise connection or full connection, and data representing types of each layer in the neural network: e.g., a pooling layer, fully-connected layer, or a SoftMax layer.

Generally, the data 110 can represent a trained neural network that has been trained on a plurality of training data 150 or a neural network that has not yet been trained.

The neural network deployment system 100 can provide the received data 110 to the neural network modification engine 120. The modification engine 120 can select one or more groups of layers of the neural network, and replace each group of layers with a respective decision tree to output a new machine learning model 130. The selection of one or more groups of layers will be described in more detail below.

Each decision tree that replaces a respective group of layers can be stored in memory 160 and is accessible for the modification engine 120. More specifically, data representing a decision tree and stored in the memory 160 can include data specifying a total number of nodes (e.g., a root and a plurality of leaves), a connectivity between nodes (e.g., how a leaf is connected to one or more other leaves), and one or more nodal operations (e.g., logic comparisons for one or more nodes).

The modification engine 120 can automatically determine a respective decision tree to replace a group of layers. Alternatively, the type of decision tree to replace a respective group of layers can be pre-determined by a user or a computer program implemented by one or more computers external to the modification engine 120. The decision tree can be a GradientBoost tree, or an AdaBoost tree.

A GradientBoost (or gradient boost) tree can be obtained through gradient boosting, which is a machine learning method of producing a model in the form of a combination (e.g. weighted sum) of one or more simple prediction models (e.g. decision trees). AdaBoost (or Adaptive Boosting) combines one or more simple prediction models (e.g. decision trees) adaptively so that, during training, a larger weight is assigned for a simple prediction model with lower performance (e.g., a measure of incorrect classifications) so that the trained model generated by the AdaBoost is more likely to correctly generate predictions given particular inputs.

The modification engine 120 can also quantize at least a portion of the neural network represented by data 110. For example, the modification engine 120 can quantize the input to the first layer of a group of layers replaced by a decision tree, and the output from the last layer of the group of layers. Alternatively, the modification engine 120 can quantize the entire neural network so that the inputs and outputs to each layer are quantized. Furthermore, the modification engine 120 can quantize at least a portion of the training data 150, and use the quantized training data to train respective decision trees, or at least a portion of the new machine learning model 130, or both.

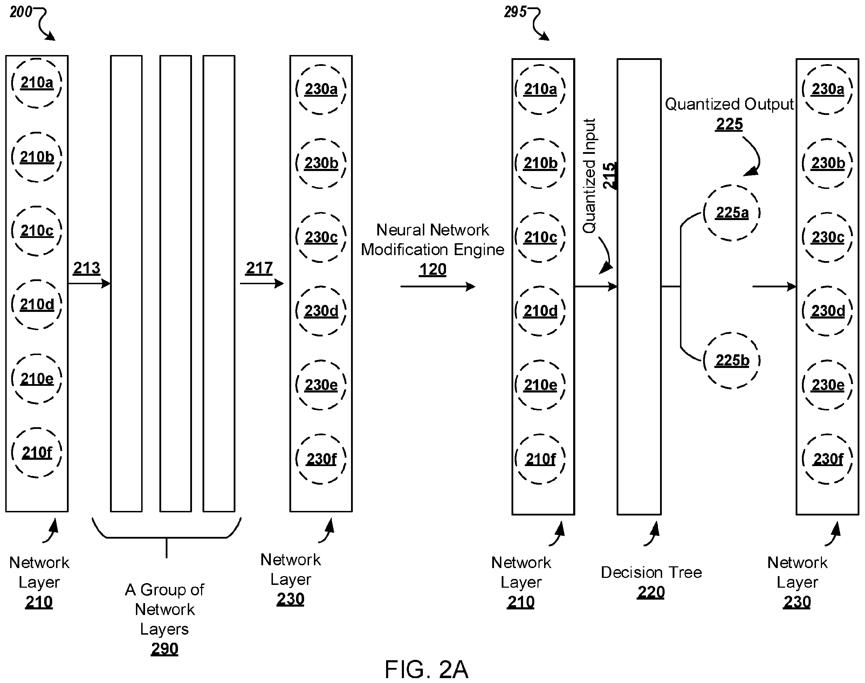

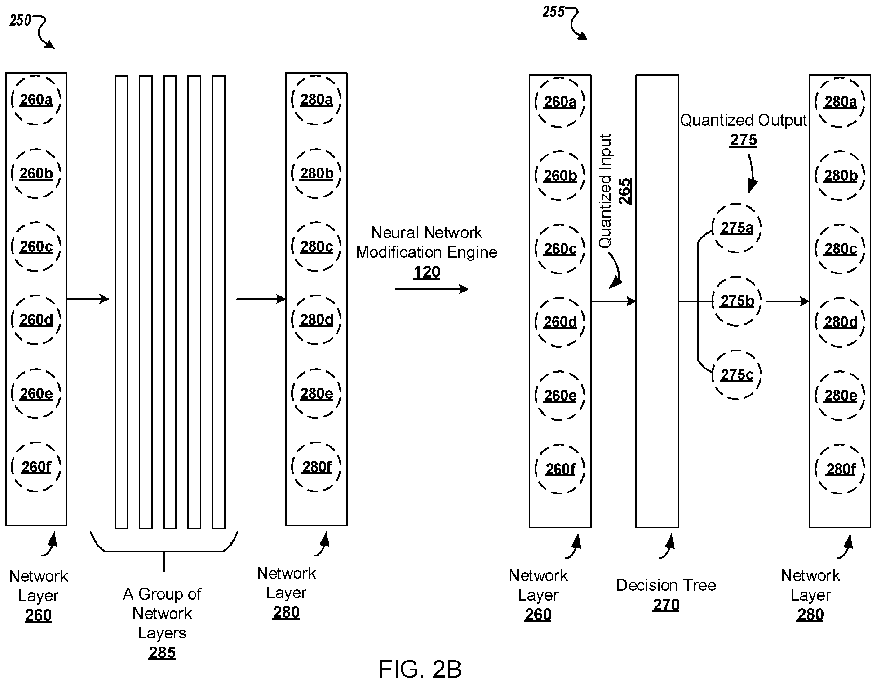

Quantization is a process of mapping input values in a large set to output values in a smaller set, and is typically used for rounding and truncation. More specifically, quantization can be used to reduce precision of a numerical value. For example, quantization can reduce the precision of a floating-point number from 32-bit to 8-bit. In connection with the context of neural networks, the modification engine 120 can quantize an activation tensor, a weight tensor of a neural network layer, or the layer outputs from a precision of 8-bit to 4-bit or even 1-bit (e.g., one bit for the mantissa). The details of quantization (e.g., binary quantization and ternary quantization) will be described in connection with FIGS. 2A and 2B.

The modification engine 120 can provide the new machine learning model 130 to the training engine 140. The training engine 140 can then train at least a portion of the new machine learning model 130 based on the training data 150 used for training the original neural network 110, and output a trained new machine learning model 180 as the output of the system 100. More specifically, the training engine 140 can train the remaining layers of the neural network that have not been replaced by decision trees for a time period using the training data 150. Alternatively or in addition, the training engine 140 can train the entire new machine learning model 130 based on quantized training data, assuming a respective gradient for each decision tree.

The time period for training the new machine learning model 130 can be a few minutes, hours, or days. Alternatively or in addition, the time period can be based upon the size of training data 150 used for training at least a portion of the new machine learning model 130. For example, the time period can be determined by the time required for training (e.g., fine tuning) the new machine learning model 130 using 100 mini-batches or 1000 mini-batches of the training data 150.

The training engine 140 can train the decision trees replacing one or more layers of the original neural network.

More specifically, the training engine 140 trains the decision trees before replacing the network layers of the original neural network with the decision trees. The training engine 140 can also fine-tune the decision trees in the new machine learning model 130, as described above.

To train the decision trees, the training engine 140 can use as training data corresponding portions of the same but quantized training data 150 for training the original neural network. Specifically, the training engine 140 trains a decision tree using respective training samples. The respective training examples include a quantized version of layer inputs to the first layer of the group of layers and a quantized version of layer outputs from the last layer of the group of layers. The group of layers are to be replaced by the decision tree. The quantized version of layer inputs and outputs are associated with layer inputs and outputs for corresponding training data 150 that has been used for training the group of layers in the original neural network.

The training engine 140 can define a loss when training a decision tree, and adjust the nodal operations to decrease the loss until it reaches below particular criteria. The loss can be a hinge loss specifying mislabeling, or a log loss representing information gain based on entropy theory, or any other suitable losses for training a decision tree. The training engine 140 can adjust nodal operations such as respective critical values for logic comparison operations on one or more nodes. In some situations, the training engine 140 can reduce overfitting by pruning a decision tree during training, i.e., deleting one or more leaves and all branches and child leaves associated with the one or more leaves. The training engine 140 can spare a portion of the original training data set as a validation set for detecting and improving overfitting.

The training engine 140 used for training at least a portion of the new machine learning models 130 can include central processing units (CPUs), graphical processing units (GPUs), tensor processing units (TPUs), or any other computing units suitable for performing operations of a neural network. Particularly, the new machine learning model can still have layers that have not been replaced including linear operations (e.g., mostly tensor operations), the training engine 140 can therefore include more TPUs than CPUs or GPUs to facilitate the training process.

The trained new machine learning model 180 can be used for efficiently generating an inference given an input. The trained new machine learning model 180 can be used for generating an inference using less computation power. For example, the trained new machine learning model 180 needs less memory size to store than that of the original neural network, because one or more layers of the neural network layers have been replaced by shallow decision trees with fewer nodes. As another example, the trained new machine learning model is compatible with quantized inputs and outputs represented using fewer bits, which reduces system memory bandwidth during computation. Moreover, because computing units such as MUX units or arithmetic logic (ALC) units can be used to perform operations in decision trees, a neural network inference engine or system can replace large, expensive computing units such as TPUs or GPUs with smaller and cheaper programmable cores with one or more MUX units or ALC units to perform inference computations for decision trees of the new machine learning model 180. The total cost and the total size for a device can therefore decrease for generating an inference for the new machine learning model.

FIG. 2A illustrates a portion of an example new machine learning model 295 having a decision tree with binary quantization output 225.

As shown in FIG. 2A, a portion of an original neural network 200 represented by input dada 110 includes a plurality of network layers. The plurality of network layers includes a group of network layers 290 determined by the system 100 to be replaced by a corresponding decision tree, a first network layer 210 preceding the first layer of the group of network layers 290, and a second network layer 230 succeeding the last layer of the group of network layers.

Each layer of the plurality layers in the portion of neural network 200 have multiple nodes each representing linear and non-linear operations. For example, network layer 210 includes nodes 210a-f. As another example, network layer 230 includes nodes 230a-230f. Also, each layer of a group of network layers 290 includes a respective number of nodes (not illustrated).

Network layers of the portion of neural network 200 are positioned according to a sequence so that, for each input to the neural network, a preceding layer can generate a layer output and provide the output to a succeeding layer as a layer activation input. For example, the first layer of the group of network layers 290 receives as layer activation input 213 from the network layer 210. As another example, the last layer of the group of network layers 290 provides layer output 217 to the succeeding layer 230.

The inputs and outputs can have respective precisions according to computation requirements. For example, the inputs and outputs can have a floating-point format with 32-bit precision. As another example, the inputs of the first few layers and the outputs from the last few layers of a neural network can have higher precision than intermediate layers.

In some implementations, the system 100 can quantize inputs and outputs of one or more layers of a neural network to reduce precision using different quantization methods. For example, the activation input 213 and layer output 217 can be quantized using binary quantization, or ternary quantization, and have a precision of 8-bit, or even 1-bit. Alternatively, the system 100 can quantize only a portion of weights or activations input for a network layer.

As described above, quantization is a process of reducing precision of a numerical value (e.g., decreasing a number of bits for representing a sign, exponents, and mantissa of the numerical value). Binary quantization and ternary quantization are branches of the quantization process.

As for binary quantization, in connection with neural network deployment system 100 and FIG. 2A, the system 100 can quantize a floating-point number into a binary set {1, -1}. The binary quantization can be considered as a particular quantization process where the system 100 uses only one digit for the sign, zero digit for the exponent power, and one digit for the significant number of the floating-point number. More specifically, using binary quantization, a weight of floating-point format 0.744 can be quantized as 1, an activation input of floating-point format -0.21 can be quantized as -1, to name just a few examples.

Similarly, ternary quantization is an alternative to the binary quantization, allowing for higher accuracy at a cost of a larger model size. In connection with FIG. 2B, the system 100 can quantize a floating-point number into a ternary set {1, 0, -1}. More specifically, a normalized weight in a floating-point format greater than 0.66 can be quantized as 1, another normalized weight smaller than 0.66 and greater than -0.66 can be quantized as 0, and another normalized weight smaller than -0.66 can be quantized as -1.

The system 100 can apply respective scaling factors to each quantized inputs and outputs by multiplying each quantized input or output by a respective scaling factor. The system 100 can, given a particular input, obtain respective scaling factors based on a measure of approximation (or similarity) between the quantized neural network and original the neural network without quantization. The system 100 can determine the scaling factors after training the modified neural network, and set them as constant when performing inference computations for the modified neural network.

Referring back to FIG. 2A, The neural network modification engine 120 can generate a new (or a new portion of) machine learning model 295 by replacing the group of network layers 290 of the original portion of neural network 200 by a decision tree 220, which has a tree depth equal to the number of layers in the group of network layers 290. The decision tree can be any type as long as it is suitable for replacing the group of network layers. For example, the decision tree can be a GradientBoost decision tree, or AdaBoost decision tree.

The system 100 can perform binary quantization for at least inputs 213 to the first layer of the group of network layers 290, and the outputs 217 from the last layer of the group of network layers 290. Alternatively, the system 100 performs binary quantization for the entire neural network.

The decision tree 200 can receive binary quantized input 215 from the preceding layer 210, and output quantized output 225 to the succeeding layer 230. More specifically, the quantized input 215 includes binary inputs (either 1 or -1) from nodes 210a-f in the preceding layer 210. Similarly, for the purpose of illustration only, the quantized output 225 can be either output 225a representing {1}, or output 225b representing {-1}. Each output from the decision tree is quantized as either 1 or -1, and is provided to the succeeding layer 230.

Before replacing the group of network layers 290 by a decision tree 220, The system 100 trains the decision tree 220 using quantized version of corresponding portions of training examples. More specifically, the system 100 can obtain a quantized version of inputs to the first layer of the group of layers 290 given training examples for the original neural network, and a quantized version of outputs from the last layer of the group of layers 290. The system 100 can set the quantized version of inputs as the inputs to the decision tree 220, set the quantized version of outputs as the outputs from the decision tree 220, and train the decision 220 using the quantized version of inputs and outputs.

FIG. 2B illustrates a portion of another example new machine learning model 255 having a decision tree with ternary quantization output 275.

Similar to FIG. 2A, the system 100 can replace a different group of layers 285 in a portion of a neural network 250 by a different decision tree 270, and quantize the inputs and outputs for the decision tree using ternary quantization. The quantized input 265 and quantized output 275 include one of the value set {-1, 0, 1}. For the purpose of illustration only, the quantized output 275 can be one of the output 275a representing {1}, output 275b representing {0}, and output 275c representing {-1}.

While the number of the group of network layers is three in FIG. 2A, and the number is five in FIG. 2B for the ease of illustration, the number of group of network layers to be replaced by a decision tree can be any suitable value determined by the system 100. For example, the number can be one, ten, or fifty.

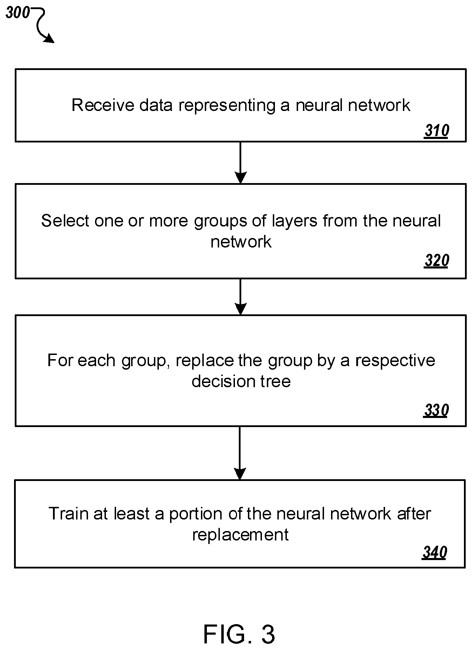

FIG. 3 is a flow diagram of an example process 300 for generating a trained new machine learning model. For convenience, the process 300 will be described as being performed by a system of one or more computers located in one or more locations. For example, a neural network deployment system 100, e.g., the system 100 depicted in FIG. 1, appropriately programmed in accordance with this specification, can perform the process 300.

The system receives data representing a neural network comprising a plurality of layers arranged in a sequence 310. The received data can include operations performed by each of the network layers of the neural network, and weights for each network layer, to name just a few examples. The network layers are arranged according to the sequence so that a layer output from a preceding layer is provided to a succeeding layer as a layer input.

The system selects one or more groups of layers from the plurality of layers, each group of layers comprising one or more layers adjacent to each other in the sequence 320. For example, the system can select three groups of layers, in which the first group of layers includes only one layer, the second group of layers includes three layers, and the last group of layers includes five layers having the second last layer of the neural network.

The system generates a new machine learning model that corresponds to the neural network by replacing each of the selected one or more groups of layers by a respective decision tree 330.

The respective decision tree for replacing a respective group of layers has a tree depth equal to

The decision tree can include any suitable tree type. For example, the decision tree can be a GradientBoost tree or an AdaBoost tree.

The system can quantize at least the input to the first layer of a group of layers and the output from the last layer of the group of layers, and provide the quantized input and output to a respective decision tree. More specifically, for each of the one or more groups of layers, the respective decision tree receives as input a quantized version of the inputs to a respective first layer in the group and generates as output a quantized version of the outputs of a respective last layer in the group.

In some implementations, the system can obtain quantized versions of inputs and outputs to respective decision trees based on respective scaling factors. More specifically, the system can generate a quantized version of inputs to a decision tree by multiplying the quantized inputs with a respective scaling factor. As described above, a scaling factor is obtained based at least on a measure of similarity between the quantized layer and the original layer.

The system trains the new machine learning model based on training data for the original neural network 340. The system trains at least a portion of layers in the original neural network that were not replaced by respective decision trees. In some implementations, the system trains the layers of the neural network that succeed the one or more group of layers of the neural network in the sequence.

In some situations, the system can train the entire new machine learning model using the same but quantized training samples for the original neural network. In some implementations, the system can use the quantized inputs and outputs for the forward propagation during training, and floating-type inputs and outputs for updating weights during backward propagation. Alternatively, the system can compute data representing respective gradients for respective decision trees in the new machine learning model.

The system can choose any suitable algorithm to select a group of layers and replace the group of layers by a respective decision tree. **In** some implementations, the system can select the group of layers iteratively. More specifically, one example algorithm for selecting the group of layers is described as below:
Assuming a neural network includes N network layers, the system indexes each layer of the neural network according to the sequence as layer *i*, where *i* ∈ [0, 1, 2, ... ,*N* - 1].

The system sets the total number of layers (all layers) from which to select a group of layers equals the size of the neural network (N layers).

The system randomly selects a layer L out of all layers as the first layer of a group of layers. In some implementations, the system can select the first layer of a group of layers according to the layer sequence. For example, the system can start with the layer 0 as the first layer for the group of layers.

For each layer in the sequence starting from layer L to the last layer N, the system first checks if the current layer has already been replaced by or belongs to a decision tree.

In determining the current layer has not been replaced by or belongs to a decision tree, the system adds the current layer into the group of layers.

The system performs quantization on the inputs to the initial layer L of the group of layers, and outputs from the current layer, and tentatively replaces the layers from the layer L to the current layer by a respective decision tree. As described above, the system can perform binary quantization or ternary quantization for the inputs and outputs to the neural network layers. In some implementations, the system quantizes all the outputs of each layer in the neural network so that the accumulator size can be limited to a particular number of decision trees.

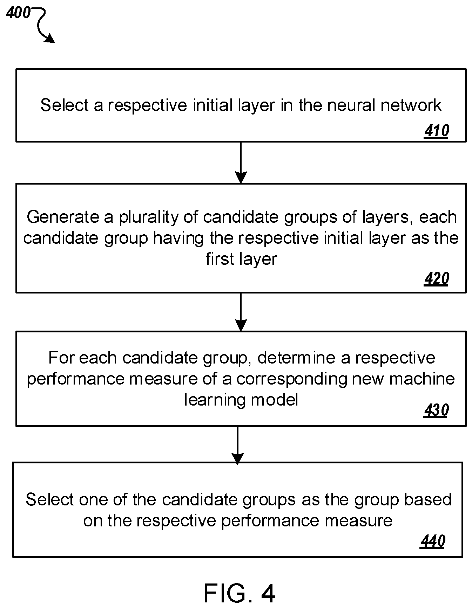

The system updates the layer information for the group of layers and measures a performance (e.g., inference accuracy) of the modified network. The detail of determining the group of layers and the performance measurement will be described in more detail in connection with FIG. 4.

After determining the group of layers, the system replaces the group of layers with a respective decision tree.

The system trains the rest of layers starting from the last layer of the *group* to the last layer of the *neural network.* More specifically, the system fine tunes the weights of the rest of layers using corresponding portions of the same training examples used for training the original neural network.

FIG. 4 is a flow diagram of an example process 400 for selecting one or more groups of neural network layers. For convenience, the process 400 will be described as being performed by a system of one or more computers located in one or more locations. For example, a neural network deployment system 100, e.g., the system 100 depicted in FIG. 1, appropriately programmed in accordance with this specification, can perform the process 400.

The system selects a respective initial layer in the neural network 410. As described above, the system can select an initial layer for a group of layers randomly or based on the layer sequence.

The system generates a respective plurality of candidate groups that each has the respective initial layer as the first layer in the candidate group 420. More specifically, the system tentatively sets a respective number of layers for each candidate groups having the same initial layer. For example, the system generates a first candidate group having only two layers, a second candidate group having four layers, and a third candidate group having six layers. In some implementations, the candidate groups can have consecutive numbers of layers. For example, the first candidate group includes a single layer, the second candidate group includes two layers, and the third candidate group includes three layers.

For each of the respective plurality of candidate groups, the system determines a respective performance measure for the candidate group that measures a performance of a corresponding new machine learning model that has the layers in the candidate group replaced by a respective decision tree 430. More specifically, the system generates a plurality of new machine learning models, each of which including a respective candidate group of layers replaced by a respective decision tree. The system performs inference computations for each of the new machine learning models using the same input data, and obtains a respective performance score for each of the new machine learning models. The respective performances cores can be obtained based on inference accuracy.

The system selects, as the group of layers to be replaced by a decision tree, one of the candidate groups of layers based on respective performance measures for the respective plurality of candidate groups 440. In some implementations, the system determines a maximum performance measure among the respective performance measures; and selects, as the group, a candidate group associated with the maximum performance measure from the respective plurality of candidate groups. Alternatively, the system selects a candidate group which has a relatively high performance score but is the fastest for performing inference computations.

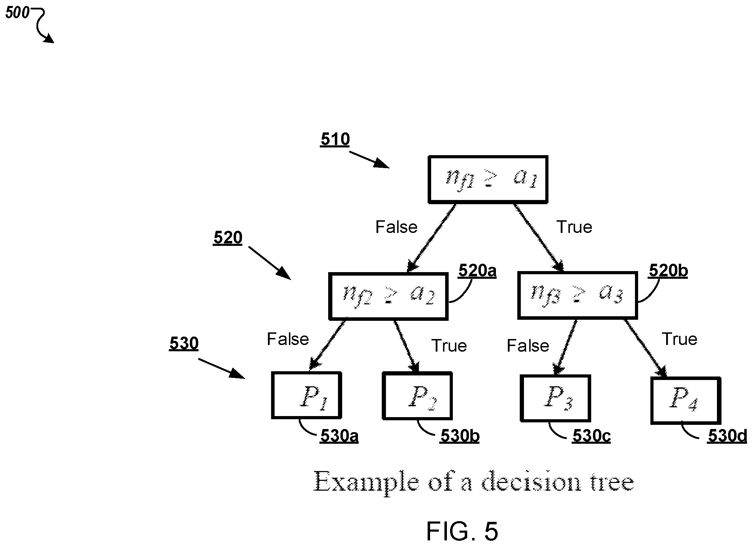

FIG. 5 illustrates an example of a decision tree 500.

As shown in FIG. 5, a decision tree 500 can include a plurality of nodes with a particular tree depth. The tree depth is determined based on the total number of tree layers. Each layer of the decision can include nodes representing respective nodal operations, e.g., logic comparisons or other suitable criteria.

For example, as shown in FIG. 5, the decision tree 500 can have a plurality of nodes, including a root node 510, and respective non-root nodes 520, 530 in different tree layers. The root node 510 is the start point of the decision tree 500 and does not have a parent node, and the non-root nodes 520 and 530 each have a parent node and are also referred to as child nodes. In general, each node except for the leaf nodes in a tree layer can have one or more branches (arrows in FIG. 5) connecting the node to respective child nodes in the next tree layer. The nodes with child nodes are also referred to as non-leaf nodes, e.g., node 510, 520a, and 520b.

For leaf nodes in the deepest or last tree layer (e.g., nodes 530a, 530b, 530c, and 530d), each can represent an inference output for the decision tree 500, and does not have any branches connecting to other child nodes. An inference output can be a prediction, for example, probability P1 for the leaf node 530a.

Referring to FIG. 5, when a system (e.g., system 100 in FIG. 1) performs inference operations of a decision tree with input data representing factors *n*_{*f*1}, *n*_{*f*2}, and *n*_{*f*3} , Each non-leaf node, except for the leaf nodes in the deepest tree layer, has a respective nodal operation (e.g., a logic comparison as shown in FIG. 5). The system can perform the nodal operation for the root node 510, obtain a logical result (e.g., true or false) from the nodal operation, and approach a corresponding child node along a respective branch based on the result. For example, the system approaches node 520a if the result is false. In some implementations, the system can use integers 0 and 1 to represent false and true. Eventually, the system approaches a particular leaf node in the deepest layer of the decision tree and returns an inference represented by the particular leaf node.

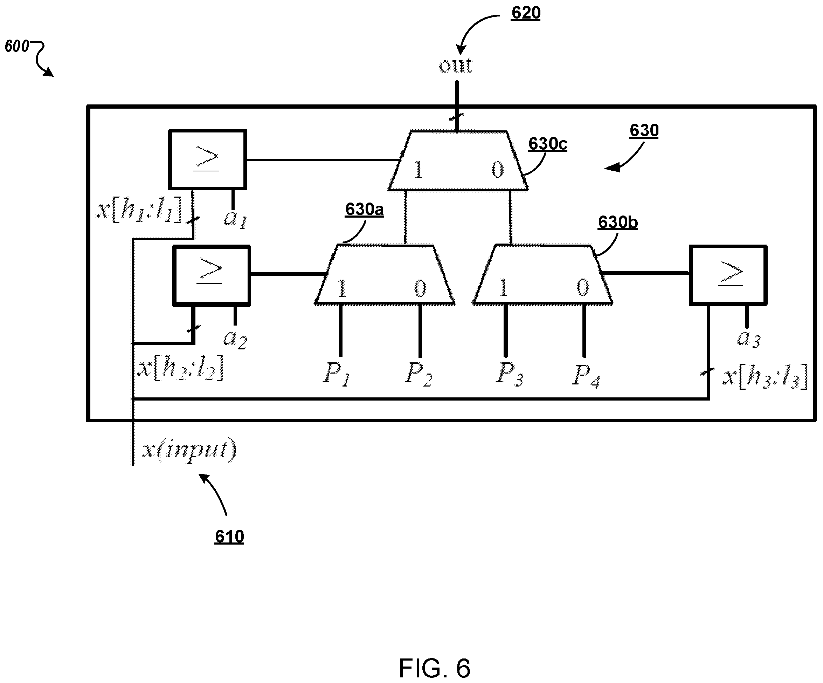

FIG. 6 illustrates an example implementation of a decision tree using fixed function hardware 600.

As shown in FIG. 6, a system (e.g., the system 100 shown in FIG. 1) can perform inference computations of a decision tree using fixed function hardware 600. More specifically, the system can receive input x 610 and return a final inference output 620 for the example decision tree shown in FIG. 5. The decision tree 600 can include a multiple compute units 630 and 640 to obtain inference results from different nodes and generate the final inference output 620 represented by a particular leaf node in the decision tree.

The system using the fixed function hardware 600 can assign each input data to a corresponding tree node, and use respective comparators and multiplexers to implement respective functions on each node. As shown in FIG. 6, the system assigns input data *x* ∈ [*h*₁*, l*₁] to the top node (which is equivalent to the root node 510 in FIG. 5), assigns input data *x* ∈ [*h*₂, *l*₂] to the left node 630a (which is equivalent to the left non-leaf node 520a in the second tree layer), and assigns input data *x* ∈ [*h*₃, *l*₃] to the right node 630b (which is equivalent to the right non-leaf node 520b in the second tree layer). The system can implement operations on each node using respective comparators 640 and multiplexers 630. For example, the system implements operations on the top node using a comparator 630c and a multiplexer 630c. More specifically, the system receives an input x, which can be a vector of real values, and selects a portion of the input with a range *x* ∈ [*h*₁, *l*₁] to provide to the top root node. The system uses the comparator 640c to compare the portion of the input against the criterion *a*₁, in which the criterion *a*₁ can represent a real value scalar. If the input data x is greater than or equal to *a*₁, the system outputs a result representing "true" using the multiplexer 630c assigned to the node, for example, the multiplexer can output an integer 1 representing "true." The system can continue performing operations on a child node that the current node links to along a corresponding tree branch. After processing operations on a non-leaf node in the second last tree layer, the system can output a final result 620 based on a value (e.g., a probability) represented by a corresponding leaf node in the decision tree.

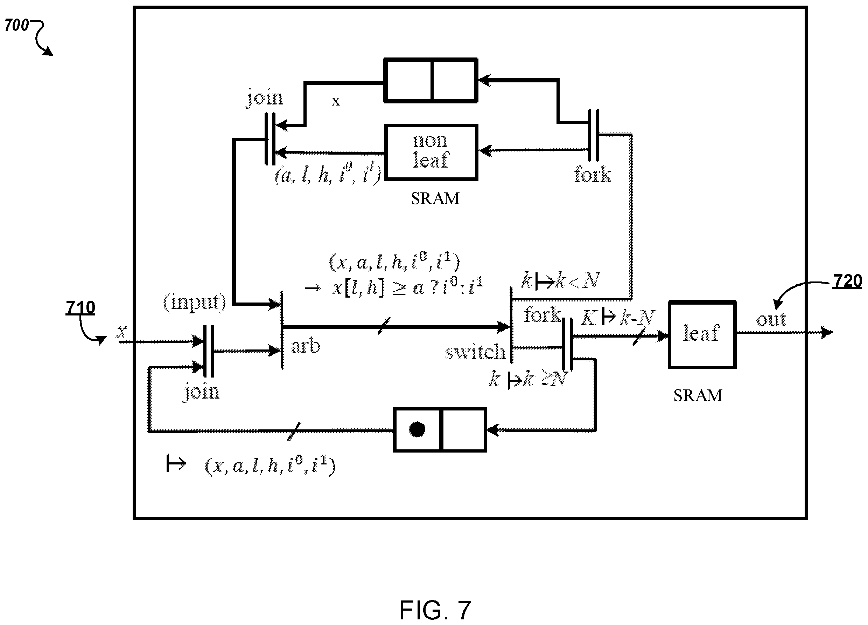

FIG. 7 illustrates an example programmable core 700 to perform inference computations for a decision tree.

As shown in FIG. 7, a system (e.g., the system 100 shown in FIG. 1) can perform inference computations for a decision tree using a programmable core 700. The programmable core 700 can receive tree input 710 and generate an inference output 720 for the tree input. The programmable core 700 can include a plurality of computing components, e.g., MUX units, ALU units, and static random-access memory (SRAMs). The programmable core 700 can perform nodal operations by merely add, select, and switch functions configured in the computing components. The programmable core 700 therefore does not need to include any MAC units for performing multiplication and additions as nodal operations for generating inference output for a decision tree.

Referring to FIG. 7, for implementing operations on a root node (e.g., root node 510 in FIG. 5), the system can receive input 710 and modify the received input 710, by a join unit, with an array (*x, a, l, h, i*⁰*, i*¹) specific to the root node and previously stored in a queue. As described above, *a* represents a nodal criterion, *l* and *h* represent a numerical range of the input x, and indices *i*⁰, *i*¹ each can represent a tree branch connecting the current node to a respective child node, and can be assigned to a respective integer value to represent a result of performing operations on the nodal operation.

The system can select the combined input using an arbitrary unit, and implement the nodal operations on the root node. For example, the system can implement comparisons between the input *x* ∈ [*h*, *l*] and the criterion *a*₁ using a respective comparator. In response, the indices *i*⁰, *i*¹ can be assigned to a respective integer value by the system to represent a result of the comparison, and direct computations of the decision tree to a corresponding child node. For example, if the system determines *x* ∈ [*h*, *l*] is greater than the criterion *a*₁, the system can assign *i*⁰ = 0, *i*¹ = 1 so that the system can perform operations on the corresponding next child node along the tree branch represented by *i*¹.

To implement operations on the next child node, the system can first apply a switch unit to determine if the next child node is a non-leaf node or leaf-node based on a numbering criterion N. To determine, the system can number each nodes using a respective tag K (e.g., an integer) and determine the type of the next child node based on a pre-determined numbering criterion. For example and in connection with FIG. 5, the system can tag nodes 510, 520a, and 520b as node 0, node 1, and node 2, and tag leaf nodes 530a, 530b, 530c, and 530d as node 3, node 4, node 5, and node 6. The system can set the numbering criterion N = 3, so that nodes with tags K < 3 are non-leaf nodes, and nodes with tags K >= 3 are leaf nodes.

In response to determining the next child node is a non-leaf node, the system can update a respective array (*x, a, l, h, i*⁰*, i*¹) for the next child node from data stored in the non-leaf SRAM. Similarly, in response to determining the next child node is a leaf node, the system can provide a final output associated with the leaf node stored in the leaf SRAM.

For parallel computations, the system can adopt fork functions to store portions of input data for a node in a queue, and a respective array identifying the operations on and a type of the node in the SRAM. The system can automatically determine when to modify the input data with the respective array using one or more joint units based on respective latency observed for each computing unit during parallel computations.

Embodiments mentioned herein provide improved methods for training a neural network. The neural network may be configured to receive any kind of digital data input and to generate any kind of score, classification, or regression output based on the input. The input data item may comprise image data (which here includes video data), audio data, or text data e.g. words or word pieces (or representations thereof e.g. embeddings) in a natural language. The input data item may comprise sequential data e.g. a sequence of data samples representing digitized audio or an image represented as a sequence of pixels, or a video represented by a sequence of images, or a sequence representing a sequence of words in a natural language. Here "image" includes e.g. a LIDAR image.

In some implementations the neural network output may comprise a feature representation, which may then be further processed to generate a system output. For example the system output may comprise a classification output for classifying the input data item into one of a plurality of categories e.g. image, video or audio categories (e.g. data representing an estimated likelihood that the input data item or an object/element of the input data item belongs to a category), or a segmentation output for segmenting regions of the input data item e.g. into objects or actions represented in an image or video. Or the system output may be an action selection output in a reinforcement learning system.

In some other implementations the network output may comprise another data item of the same or a different type. For example the input data item may be an image, audio, or text and the output data item may be a modified version of the image, audio or text, e.g. changing a style, content, property, pose and so forth of the input data item or of one or more objects or elements within the input data item; or filling in a (missing) portion of the input data item; or predicting another version of the data item or an extension of a video or audio data item; or providing an up-sampled (or down-sampled) version of the input data item. For example the input data item may be a representation of text in a first language and the output data item may be a translation of the text into another language, or a score for a translation of the text into another language. In another example an input image may be converted to a video, or a wire frame model, or CAD model, or an input image in 2D may be converted into 3D; or vice-versa. Or the input data item may comprise features derived from spoken utterances or sequences of spoken utterances or features derived therefrom and the network system output may comprise a score for each of a set of pieces of text, each score representing an estimated likelihood that the piece of text is the correct transcript based on the features. In another example the input data item may be an image, audio, or text and the output data item may be a representation of the input data item in a different format. For example the neural network may convert text to speech, or vice-versa (for speech recognition), or an image (or video) to text (e.g. for captioning). When generating an output comprising sequential data the neural network may include one or more convolutional e.g. dilated convolutional layers.

In some other implementations the network output may comprise an output for selecting an action to be performed by an agent, such as a robot or other mechanical agent in an environment e.g. a real world environment or a simulation of a real world environment.

In some implementations the neural network is configured to receive an input data item and to process the input data item to generate a feature representation of the input data item in accordance with the network parameters. Generally, a feature representation of a data item is an ordered collection of numeric values, e.g., a vector, that represents the data item as a point in a multi-dimensional feature space. In other words, each feature representation may include numeric values for each of a plurality of features of the input data item. As previously described the neural network can be configured to receive as input any kind of digital data input and to generate a feature representation from the input. For example, the input data items, which may also be also referred to as network inputs, can be images, portions of documents, text sequences, audio data, medical data, and so forth.

Once trained, the feature representations can provide an input to another system e.g., for use in performing a machine learning task on the network inputs. Example tasks may include feature based retrieval, clustering, near duplicate detection, verification, feature matching, domain adaptation, video based weakly supervised learning; and for video e.g. object tracking across video frames, gesture recognition of gestures that are performed by entities depicted in the video.

If the inputs to the neural network are images or features that have been extracted from images, the output generated by the neural network for a given image may be scores for each of a set of object categories, with each score representing an estimated likelihood that the image contains an image of an object belonging to the category. More specifically, each of the input images or features extracted from the input images can include one or more pixels, each having a respective intensity value. The neural network is configured to process the respective intensity values of the input images or features extracted from images and generate predictions, e.g., image classification, image recognition, or image segmentation.

As another example, if the inputs to the neural network are Internet resources (e.g., web pages), documents, or portions of documents or features extracted from Internet resources, documents, or portions of documents, the output generated by the neural network for a given Internet resource, document, or portion of a document may be a score for each of a set of topics, with each score representing an estimated likelihood that the Internet resource, document, or document portion is about the topic.

As another example, if the inputs to the neural network are features of an impression context for a particular advertisement, the output generated by the neural network may be a score that represents an estimated likelihood that the particular advertisement will be clicked on.

As another example, if the inputs to the neural network are features of a personalized recommendation for a user, e.g., features characterizing the context for the recommendation, e.g., features characterizing previous actions taken by the user, the output generated by the neural network may be a score for each of a set of content items, with each score representing an estimated likelihood that the user will respond favorably to being recommended the content item.

As another example, if the input to the neural network is a sequence of text in one language, the output generated by the neural network may be a score for each of a set of pieces of text in another language, with each score representing an estimated likelihood that the piece of text in the other language is a proper translation of the input text into the other language.

As another example, if the input to the neural network is a sequence representing a spoken utterance, the output generated by the neural network may be a score for each of a set of pieces of text, each score representing an estimated likelihood that the piece of text is the correct transcript for the utterance.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a standalone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, .e.g., a TensorFlow framework, a Microsoft Cognitive Toolkit framework, an Apache Singa framework, or an Apache MXNet framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.
Certain features that are described in this specification in the context of separate embodiments can also be implemented in combination in a single embodiment. Conversely, various features that are described in the context of a single embodiment can also be implemented in multiple embodiments separately or in any suitable subcombination.
In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims.

## Claims

1. A method implemented by one or more computers, the method comprising:
receiving data representing a neural network comprising a plurality of layers arranged in a sequence;
selecting one or more groups of layers from the plurality of layers, each group of layers comprising one or more layers adjacent to each other in the sequence;
generating a new machine learning model that corresponds to the neural network, wherein the new machine learning model comprises one or more decision trees that replace the one or more groups of layers and one or more layers of the neural network that were not replaced by a respective decision tree, wherein generating the new machine learning model comprises:
for each group of layers, selecting a respective decision tree that replaces the group of layers, wherein the respective decision tree receives as input a quantized version of inputs to a respective first layer in the group and generates as output a quantized version of outputs of a respective last layer in the group and training the decision tree using quantized versions of inputs to the respective first layer and quantized versions of outputs of the respective last layer obtained using the original neural network based on training data, wherein a tree depth of the respective decision tree equals the number of layers in the group; and
outputting the new machine learning model to a system configured to implement the new machine learning model wherein the system comprises one or more computing units for implementing the decision trees through one or more functions selected from add, select or switch functions.

2. The method of claim 1, further comprising:
training, based on training data for the neural network, the new machine learning model by training at least a portion of the layers in the neural network that were not replaced by respective decision trees.

3. The method of claim 2, wherein training at least a portion of the layers in the neural network that were not replaced by respective decision trees comprises:
training the layers of the neural network that succeed the one or more groups of layers of the neural network according to the sequence.

4. The method of any one of claims 1-3, wherein selecting each of the one or more groups of layers comprises:
selecting a respective initial layer in the neural network;
generating a respective plurality of candidate groups that each have the respective initial layer as the first layer in the candidate group;
for each of the respective plurality of candidate groups, determining a respective performance measure for the candidate group that measures a performance of a corresponding new machine learning model that has the layers in the candidate group replaced by a respective decision tree; and
selecting, as the group, one of the candidate groups based on respective performance measures for the respective plurality of candidate groups;
wherein selecting, as the group, one of the candidate groups based on respective performance measures comprises:
determining a maximum performance measure among the respective performance measures; and
selecting, as the group, a candidate group associated with the maximum performance measure from the respective plurality of candidate groups.

5. The method of claim 4, wherein selecting, for generating a respective group of layers, the respective initial layer in the neural network comprises:
selecting the respective initial layer by a random process or based on the sequence of the neural network.

6. The method of any one of claims 1-5, wherein the quantized version of the inputs to a respective first layer in the group and the quantized version of the outputs of a respective last layer in the group are generated using binary or ternary quantization.

7. The method of any one of claims 1-6, wherein the respective decision tree layer replacing the group of layers comprises a GradientBoost decision tree or AdaBoost decision tree.

8. The method of any one of claims 1-7, wherein each layer comprises a respective set of weights, the method further comprising:
for each layer in the neural network not in the one or more groups of layers, quantizing at least a portion of weights associated with the layer.

9. The method of any one of claims 1-8, wherein the quantized version of the inputs to a respective first layer in the group or the quantized version of the outputs of a respective last layer in the group are generated by one or more scaling factors.

10. The method of any one of claims 1-9, wherein the neural network represented by the received data is an initially trained neural network by a training data set,
wherein each decision tree that replaces a respective group of layers has been trained based on the a respective portion of a quantized version of the training data set, and
wherein each training sample of the respective portion of the quantized version of the training data set comprises: (i) a quantized version of layer inputs to the first layer of the group, and (ii) a quantized version of layer outputs from the last layer of the group.

11. A system comprising one or more computers and one or more storage devices storing instructions that, when executed by the one or more computers, cause the one or more computers to perform the operations of the method any one of claims 1 to 10.

12. One or more computer storage media storing instructions that, when executed by one or more computers, cause the one or more computers to perform the operations of the method any one of claims 1 to 10.

## Patentansprüche

1. Verfahren, das von einem oder mehreren Computern implementiert wird, wobei das Verfahren umfasst:
Empfangen von Daten, die ein neuronales Netzwerk darstellen, das eine Mehrzahl von in einer Sequenz angeordneten Schichten umfasst;
Auswählen einer oder mehrerer Schichtgruppen aus der Mehrzahl von Schichten, wobei jede Schichtgruppe eine oder mehrere in der Sequenz zueinander benachbarte Schichten umfasst;
Erzeugen eines neuen Maschinenlernmodells, das dem neuronalen Netzwerk entspricht, wobei das neue Maschinenlernmodell einen oder mehrere Entscheidungsbäume, die die eine oder mehreren Schichtgruppen ersetzen, und eine oder mehrere Schichten des neuronalen Netzwerks, die nicht durch einen jeweiligen Entscheidungsbaum ersetzt wurden, umfasst, wobei Erzeugen des neuen Maschinenlernmodells umfasst:
für jede Schichtgruppe, Auswählen eines jeweiligen Entscheidungsbaums, der die Schichtgruppe ersetzt, wobei der jeweilige Entscheidungsbaum als Eingabe eine quantisierte Version von Eingaben zu einer jeweiligen ersten Schicht in der Gruppe empfängt und als Ausgabe eine quantisierte Version von Ausgaben einer jeweiligen letzten Schicht in der Gruppe erzeugt und Trainieren des Entscheidungsbaums unter Verwendung quantisierter Versionen von Eingaben zu der jeweiligen ersten Schicht und quantisierter Versionen von Ausgaben der jeweiligen letzten Schicht, die unter Verwendung des ursprünglichen neuronalen Netzwerks basierend auf Trainingsdaten erhalten werden, wobei eine Baumtiefe des jeweiligen Entscheidungsbaums gleich der Anzahl von Schichten in der Gruppe ist; und
Ausgeben des neuen Maschinenlernmodells an ein System, das konfiguriert ist, das neue Maschinenlernmodell zu implementieren, wobei das System eine oder mehrere Recheneinheiten zum Implementieren der Entscheidungsbäume durch eine oder mehrere Funktionen, ausgewählt aus Additions-, Auswahl- oder Umschaltfunktion, umfasst.

2. Verfahren nach Anspruch 1, ferner umfassend:
Trainieren, basierend auf Trainingsdaten für das neuronale Netzwerk, des neuen Maschinenlernmodells durch Trainieren zumindest eines Teils der Schichten in dem neuronalen Netzwerk, die nicht durch jeweilige Entscheidungsbäume ersetzt wurden.

3. Verfahren nach Anspruch 2, wobei Trainieren zumindest eines Teils der Schichten in dem neuronalen Netzwerk, die nicht durch jeweilige Entscheidungsbäume ersetzt wurden, umfasst:
Trainieren der Schichten des neuronalen Netzwerks, die der einen oder den mehreren Schichtgruppen des neuronalen Netzwerks gemäß der Sequenz nachfolgen.

4. Verfahren nach einem der Ansprüche 1-3, wobei Auswählen jeder der einen oder mehreren Schichtgruppen umfasst:
Auswählen einer jeweiligen Anfangsschicht in dem neuronalen Netzwerk;
Erzeugen einer jeweiligen Mehrzahl von Kandidatengruppen, die jeweils die jeweilige Anfangsschicht als die erste Schicht in der Kandidatengruppe aufweisen;
für jede der jeweiligen Mehrzahl von Kandidatengruppen, Bestimmen eines jeweiligen Leistungsmaßes für die Kandidatengruppe, das eine Leistung eines entsprechenden neuen Maschinenlernmodells misst, bei dem die Schichten in der Kandidatengruppe durch einen jeweiligen Entscheidungsbaum ersetzt sind; und
Auswählen, als die Gruppe, einer der Kandidatengruppen basierend auf jeweiligen Leistungsmaßen für die jeweilige Mehrzahl von Kandidatengruppen;
wobei Auswählen, als die Gruppe, einer der Kandidatengruppen basierend auf jeweiligen Leistungsmaßen umfasst:
Bestimmen eines maximalen Leistungsmaßes unter den jeweiligen Leistungsmaßen; und
Auswählen, als die Gruppe, einer Kandidatengruppe, die dem maximalen Leistungsmaß zugeordnet ist, aus der jeweiligen Mehrzahl von Kandidatengruppen.

5. Verfahren nach Anspruch 4, wobei Auswählen, zum Erzeugen einer jeweiligen Schichtgruppe, der jeweiligen Anfangsschicht in dem neuronalen Netzwerk umfasst:
Auswählen der jeweiligen Anfangsschicht durch einen Zufallsprozess oder basierend auf der Sequenz des neuronalen Netzwerks.

6. Verfahren nach einem der Ansprüche 1-5, wobei die quantisierte Version der Eingaben zu einer jeweiligen ersten Schicht in der Gruppe und die quantisierte Version der Ausgaben einer jeweiligen letzten Schicht in der Gruppe unter Verwendung binärer oder ternärer Quantisierung erzeugt werden.

7. Verfahren nach einem der Ansprüche 1-6, wobei die jeweilige die Schichtgruppe ersetzende Entscheidungsbaumschicht einen GradientBoost-Entscheidungsbaum oder AdaBoost-Entscheidungsbaum umfasst.

8. Verfahren nach einem der Ansprüche 1-7, wobei jede Schicht einen jeweiligen Gewichtssatz umfasst, wobei das Verfahren ferner umfasst:
für jede Schicht in dem neuronalen Netzwerk, die nicht in der einen oder den mehreren Schichtgruppen ist, Quantisieren zumindest eines Teils von Gewichten, die der Schicht zugeordnet sind.

9. Verfahren nach einem der Ansprüche 1-8, wobei die quantisierte Version der Eingaben zu einer jeweiligen ersten Schicht in der Gruppe oder die quantisierte Version der Ausgaben einer jeweiligen letzten Schicht in der Gruppe durch einen oder mehrere Skalierungsfaktoren erzeugt werden.

10. Verfahren nach einem der Ansprüche 1-9, wobei das durch die empfangenen Daten dargestellte neuronale Netzwerk ein anfänglich durch einen Trainingsdatensatz trainiertes neuronales Netzwerk ist,
wobei jeder Entscheidungsbaum, der eine jeweilige Schichtgruppe ersetzt, basierend auf einem jeweiligen Teil einer quantisierten Version des Trainingsdatensatzes trainiert worden ist, und
wobei jedes Trainingsbeispiel des jeweiligen Teils der quantisierten Version des Trainingsdatensatzes umfasst: (i) eine quantisierte Version von Schichteingaben zu der ersten Schicht der Gruppe und (ii) eine quantisierte Version von Schichtausgaben von der letzten Schicht der Gruppe.

11. System, umfassend einen oder mehrere Computer und eine oder mehrere Speichervorrichtungen, die Anweisungen speichern, die, wenn sie von dem einen oder den mehreren Computern ausgeführt werden, den einen oder die mehreren Computer veranlassen, die Operationen des Verfahrens nach einem der Ansprüche 1 bis 10 durchzuführen.

12. Ein oder mehrere Computerspeichermedien, die Anweisungen speichern, die, wenn sie von einem oder mehreren Computern ausgeführt werden, den einen oder die mehreren Computer veranlassen, die Operationen des Verfahrens nach einem der Ansprüche 1 bis 10 durchzuführen.

## Revendications

1. Procédé mis en œuvre par un ou plusieurs ordinateurs, le procédé comprenant :
la réception de données représentant un réseau neuronal comprenant une pluralité de couches agencées en une séquence ;
la sélection d'un ou de plusieurs groupes de couches à partir de la pluralité de couches, chaque groupe de couches comprenant une ou plusieurs couches adjacentes les unes aux autres dans la séquence ;
la génération d'un nouveau modèle d'apprentissage automatique qui correspond au réseau neuronal, dans lequel le nouveau modèle d'apprentissage automatique comprend un ou plusieurs arbres de décision qui remplacent les un ou plusieurs groupes de couches et une ou plusieurs couches du réseau neuronal qui n'ont pas été remplacées par un arbre de décision respectif, dans lequel la génération du nouveau modèle d'apprentissage automatique comprend :
pour chaque groupe de couches, la sélection d'un arbre de décision respectif qui remplace le groupe de couches, dans lequel l'arbre de décision respectif reçoit en entrée une version quantifiée d'entrées d'une première couche respective dans le groupe et génère en sortie une version quantifiée de sorties d'une dernière couche respective dans le groupe, et l'entraînement de l'arbre de décision à l'aide de versions quantifiées d'entrées de la première couche respective et de versions quantifiées de sorties de la dernière couche respective obtenues à l'aide du réseau neuronal d'origine sur la base de données d'entraînement, dans lequel une profondeur d'arbre de l'arbre de décision respectif est égale au nombre de couches dans le groupe ; et
la sortie du nouveau modèle d'apprentissage automatique vers un système configuré pour mettre en œuvre le nouveau modèle d'apprentissage automatique, dans lequel le système comprend une ou plusieurs unités de calcul pour mettre en œuvre les arbres de décision à travers une ou plusieurs fonctions sélectionnées parmi des fonctions d'ajout, de sélection ou de commutation.

2. Procédé selon la revendication 1, comprenant en outre :
l'entraînement, sur la base de données d'entraînement pour le réseau neuronal, du nouveau modèle d'apprentissage automatique en entraînant au moins une partie des couches dans le réseau neuronal qui n'ont pas été remplacées par des arbres de décision respectifs.

3. Procédé selon la revendication 2, dans lequel l'entraînement d'au moins une partie des couches dans le réseau neuronal qui n'ont pas été remplacées par des arbres de décision respectifs comprend :
l'entraînement des couches du réseau neuronal qui succèdent aux un ou plusieurs groupes de couches du réseau neuronal selon la séquence.

4. Procédé selon l'une quelconque des revendications 1 à 3, dans lequel la sélection de chacun des un ou plusieurs groupes de couches comprend :
la sélection d'une couche initiale respective dans le réseau neuronal ;
la génération d'une pluralité respective de groupes candidats qui ont chacun la couche initiale respective en tant que première couche dans le groupe candidat ;
pour chacun des groupes candidats de la pluralité respective de groupes candidats, la détermination d'une mesure de performance respective pour le groupe candidat qui mesure une performance d'un nouveau modèle d'apprentissage automatique correspondant dont les couches dans le groupe candidat sont remplacées par un arbre de décision respectif ; et
la sélection, en tant que groupe, de l'un des groupes candidats sur la base de mesures de performance respectives pour la pluralité respective de groupes candidats ;
dans lequel la sélection, en tant que groupe, de l'un des groupes candidats sur la base de mesures de performance respectives comprend :
la détermination d'une mesure de performance maximale parmi les mesures de performance respectives ; et
la sélection, en tant que groupe, d'un groupe candidat associé à la mesure de performance maximale à partir de la pluralité respective de groupes candidats.

5. Procédé selon la revendication 4, dans lequel la sélection, pour générer un groupe de couches respectif, de la couche initiale respective dans le réseau neuronal comprend :
la sélection de la couche initiale respective par un processus aléatoire ou sur la base de la séquence du réseau neuronal.

6. Procédé selon l'une quelconque des revendications 1 à 5, dans lequel la version quantifiée des entrées d'une première couche respective dans le groupe et la version quantifiée des sorties d'une dernière couche respective dans le groupe sont générées à l'aide d'une quantification binaire ou ternaire.

7. Procédé selon l'une quelconque des revendications 1 à 6, dans lequel la couche d'arbre de décision respective remplaçant le groupe de couches comprend un arbre de décision GradientBoost ou un arbre de décision AdaBoost.

8. Procédé selon l'une quelconque des revendications 1 à 7, dans lequel chaque couche comprend un ensemble respectif de poids, le procédé comprenant en outre :
pour chaque couche dans le réseau neuronal qui ne fait pas partie des un ou plusieurs groupes de couches, la quantification d'au moins une partie de poids associés à la couche.

9. Procédé selon l'une quelconque des revendications 1 à 8, dans lequel la version quantifiée des entrées d'une première couche respective dans le groupe ou la version quantifiée des sorties d'une dernière couche respective dans le groupe sont générées par un ou plusieurs facteurs d'échelle.

10. Procédé selon l'une quelconque des revendications 1 à 9, dans lequel le réseau neuronal représenté par les données reçues est un réseau neuronal initialement entraîné par un ensemble de données d'entraînement,
dans lequel chaque arbre de décision qui remplace un groupe de couches respectif a été entraîné sur la base d'une partie respective d'une version quantifiée de l'ensemble de données d'entraînement, et
dans lequel chaque échantillon d'entraînement de la partie respective de la version quantifiée de l'ensemble de données d'entraînement comprend : (i) une version quantifiée d'entrées de couche de la première couche du groupe, et (ii) une version quantifiée de sorties de couche de la dernière couche du groupe.

11. Système comprenant un ou plusieurs ordinateurs et un ou plusieurs dispositifs de stockage stockant des instructions qui, lorsqu'elles sont exécutées par les un ou plusieurs ordinateurs, amènent les un ou plusieurs ordinateurs à réaliser les opérations du procédé selon l'une quelconque des revendications 1 à 10.

12. Un ou plusieurs supports de stockage informatique stockant des instructions qui, lorsqu'elles sont exécutées par un ou plusieurs ordinateurs, amènent les un ou plusieurs ordinateurs à réaliser les opérations du procédé selon l'une quelconque des revendications 1 à 10.
